# EUROPEAN PATENT SPECIFICATION

(11) **EP 3 926 234 B1**
(45) Date of publication and mention of the grant of the patent: **03.05.2023**
(21) Application number: 20195285.0
(22) Date of filing: 09.09.2020
(51) Int. Cl.: F21V 19/00, F21V 15/01, F21Y 115/10, F21Y 105/16, F21V 3/00, B21J 15/00, F16B 5/04

(54) **DIRECT LIGHTING TYPE PANEL LAMP**
DECKENLEUCHTE MIT DIREKTER BELEUCHTUNG
LAMPE DE PANNEAU DE TYPE ÉCLAIRAGE DIRECT

(30) Priority: 15.06.2020 CN 202021096469 U
(43) Date of publication of application: 22.12.2021
(73) Proprietor: Leedarson Lighting Co., Ltd., Zhangzhou, Fujian 363999 (CN)
(72) Inventor: Liu, Youcai, Zhangzhou, Fujian 363999 (CN); Liu, Zhengkun, Zhangzhou, Fujian 363999 (CN); Lin, Huiju, Zhangzhou, Fujian 363999 (CN); Gong, Guangquan, Zhangzhou, Fujian 363999 (CN)
(74) Representative: Dilg, Haeusler, Schindelmann Patentanwaltsgesellschaft mbH

(56) References cited:
- WO-A1-2014/048395
- CN-U- 201 779 511
- CN-U- 203 363 753
- CN-U- 207 555 307
- JP-A- 2013 137 872
- US-A1- 2014 321 123

## Description

### Technical Field

The present disclosure relates to the field of lighting devices, and in particular to a direct lighting type panel lamp.

### Background Art

A panel lamp has a thin base plate, thus it is difficult to ensure stable locking of a light source board with screws by means of drilling threaded holes and locking the light source board with the screws. During use, the screws are likely to loosen, whereby the light source board is loosened. For some panel lamps with ultra-thin base plates, threaded holes cannot be made in the base plates. Document WO 2014/048395 A1 discloses a lamp according to the preamble of claim 1.

### Summary

An object of the present disclosure is to provide a direct lighting type panel lamp, which is intended to solve the problem of large difficulty in fixing light source boards in panel lamps with thin base plates in the prior art.

To achieve this object, the following technical solution is employed in an embodiment of the present disclosure:
A direct lighting type panel lamp comprises a base plate, at least one light source board arranged on the base plate, a rivet connected between the light source board and the base plate, and a diffusion plate connected to the base plate, wherein the base plate is provided with a first riveting through hole, the light source board is provided with a second riveting through hole, and the rivet passes through the first riveting through hole and the second riveting through hole so that the light source board is in riveting connection to the base plate.

In one embodiment, a flexible washer is arranged between the rivet and the base plate, and the flexible washer is arranged surrounding an orifice of the first riveting through hole; and one side of the flexible washer abuts against the base plate, and the other side of the flexible washer abuts against the rivet.

In one embodiment, the flexible washer is a rubber ring or a silicone ring.

In one embodiment, a thermally conductive tape is arranged between the light source board and the base plate, one side of the thermally conductive tape adheres to the light source board, and the other side of the thermally conductive tape abuts against the base plate.

According to the invention, the base plate is provided with a mounting groove, and the light source board is embedded in the mounting groove.

According to the invention, an inner side wall of the mounting groove is provided with a retreated notch.

In one embodiment, a connecting component is arranged between the base plate and the diffusion plate, the connecting component is fixedly connected to the base plate, and the diffusion plate is fixedly connected to the connecting component.

In one embodiment, the base plate is provided with connecting through holes, and the connecting component comprises four pressure plates connected end to end in sequence, and connecting screws arranged between the pressure plates and the base plate; the pressure plates are provided with connecting threaded holes corresponding to the connecting through holes, and the connecting screws pass through the connecting through holes and are threadedly connected into the connecting threaded holes.

In one embodiment, each of the pressure plates has a surface opposite to the diffusion plate provided as a holding inclined surface.

In one embodiment, a plurality of rivets are arranged between each of the light source boards and the base plate, and the plurality of rivets are arranged in sequence along a length direction of the light source board, with the adjacent rivets being spaced apart by the same distance.

In one embodiment, a plurality of light source boards are provided, the plurality of light source boards are parallel to each other, and the adjacent light source boards are spaced apart by the same distance. Each of the light source boards is provided with a plurality of lamp beads. The plurality of lamp beads are arranged in sequence along the length direction of the light source board, and the adjacent lamp beads are spaced apart by the same interval.

The embodiments of the present disclosure have the following advantageous effects. During assembling of the direct lighting type panel lamp, the light source board is first placed on the base plate, and the second riveting through hole of the light source board is aligned with the first riveting through hole of the base plate, a rivet is passed through the first riveting through hole and the second riveting through hole, and the rivet is deformed into a desired pattern by using a rivet pulling tool, so that the light source board is closely attached to the base plate, such that the light source board is fixedly mounted to the base plate. This can ensure long-term stability and less loosening of the light source board, as compared with the manner of screw connection.

### Brief Description of Drawings

In order to more clearly illustrate technical solutions of the embodiments of the present disclosure, drawings required for use in the description of the embodiments or the prior art will be described briefly below. It is obvious that the drawings in the following description are merely illustrative of some embodiments of the present disclosure. It will be understood by those of ordinary skill in the art that other drawings can also be obtained from these drawings without any inventive effort.
FIG. 1 is a schematic structural view of a direct lighting type panel lamp in an embodiment of the present disclosure;
FIG. 2 is a sectional view of a direct lighting type panel lamp in an embodiment of the present disclosure;
FIG. 3 is a partial enlarged view of a rivet in FIG. 2;
FIG. 4 is a schematic view showing the internal structure of a direct lighting type panel lamp in an embodiment of the present disclosure; and
FIG. 5 is an exploded view of a direct lighting type panel lamp in an embodiment of the present disclosure;

In the drawings:
1. base plate; 11. first riveting through hole; 12. mounting groove; 13. retreated notch; 15. connecting through hole; 2. light source board; 21. second riveting through hole; 22. lamp bead; 3. rivet 4. diffusion plate; 5. flexible washer; 6. thermally conductive tape; 7. connecting component; 71. pressure plate; 711. holding inclined surface; 72. connecting screw.

### Detailed Description of Embodiments

In order to further clarify the objects, technical solutions, and advantages of the present disclosure, the present disclosure will be described below in further detail with reference to the drawings and embodiments. It should be understood that the specific embodiments described here are only intended to explain the present disclosure, and not to limit the present disclosure.

It should be noted that when an element is said to be "fixed to" or "arranged on" another element, it may be directly on the another element or indirectly on the another element. When an element is said to be "connected to" another element, it may be connected directly to the another element or connected indirectly to the another element.

It should be understood that orientation or positional relationships indicated by the terms such as "length", "width", "up", "down", "front", "rear", "left", "right", "vertical", "horizontal", "top", "bottom", "inside", and "outside" are the orientation or positional relationships shown based on the drawings, and these terms are intended only to facilitate the description of the present disclosure and simplify the description, but not intended to indicate or imply that the referred devices or elements must be in a particular orientation, or constructed or operated in the particular orientation, and therefore should not be construed as limiting the present disclosure.

In addition, the terms "first" and "second" are used for descriptive purposes only, and should not be understood as an indication or implication of relative importance, or an implicit indication of the number of the indicated technical features. Therefore, a feature defined with the terms "first" or "second" may explicitly or implicitly include one or more such features. In the description of the present disclosure, "a plurality" means two or more unless otherwise expressly and specifically defined.

The implementation of the present disclosure will be described in detail below in connection with specific embodiments.

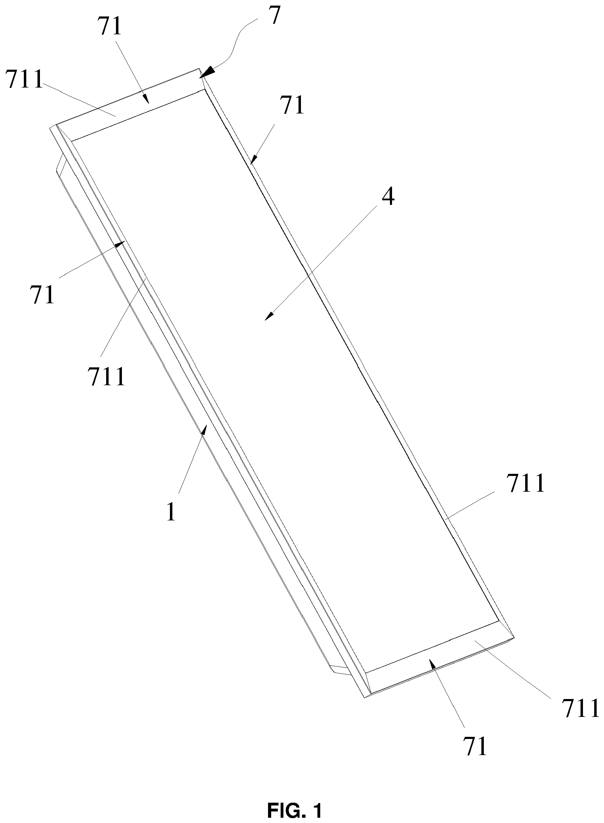

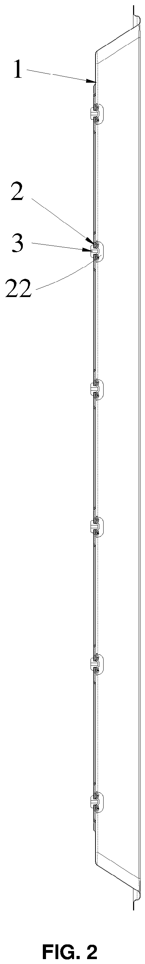

As shown in FIGS. 1 to 3, a direct lighting type panel lamp is proposed in an embodiment of the present disclosure, which comprises a base plate 1, at least one light source board 2 arranged on the base plate 1, rivets 3 connected between the light source board 2 and the base plate 1, and a diffusion plate 4 connected to the base plate 1. The base plate 1 is provided with first riveting through holes 11, the light source board 2 is provided with second riveting through holes 21, and the rivet 3 passes through the first riveting through hole 11 and the second riveting through hole 21 so that the light source board 2 is in riveting connection to the base plate 1.

In the embodiment of the present disclosure, during assembling of the direct lighting type panel lamp, the light source board 2 is first placed on the base plate 1, and the second riveting through hole 21 of the light source board 2 is aligned with the first riveting through hole 11 of the base plate 1, a rivet 3 is penetrated the first riveting through hole 11 and the second riveting through hole 21, and the rivet 3 is deformed into a desired pattern by using a rivet pulling tool, so that the light source board 2 is closely attached to the base plate 1, such that the light source board 2 is fixedly mounted to the base plate 1. This can ensure long-term stability and less loosening of the light source board 2, as compared with the manner of screw connection. Especially for lamps with ultra-thin base plates 1 which are restricted by the fact that threaded holes cannot be made therein, there are no rigid requirements for the thickness of the base plate 1 in the connection mode using the rivet 3.

The connection mode using the rivet 3 allows more accurate prediction of the lifetime of the stable connection, will not result in volatilization of substances harmful to the environment due to aging of glue, and will not have the problem of poor fixation of the light source board 2 caused by uneven gluing, compared to the traditional gluing method. Lantern-shaped rivets 3 may be selected and used as the rivets 3 to achieve a better appearance.

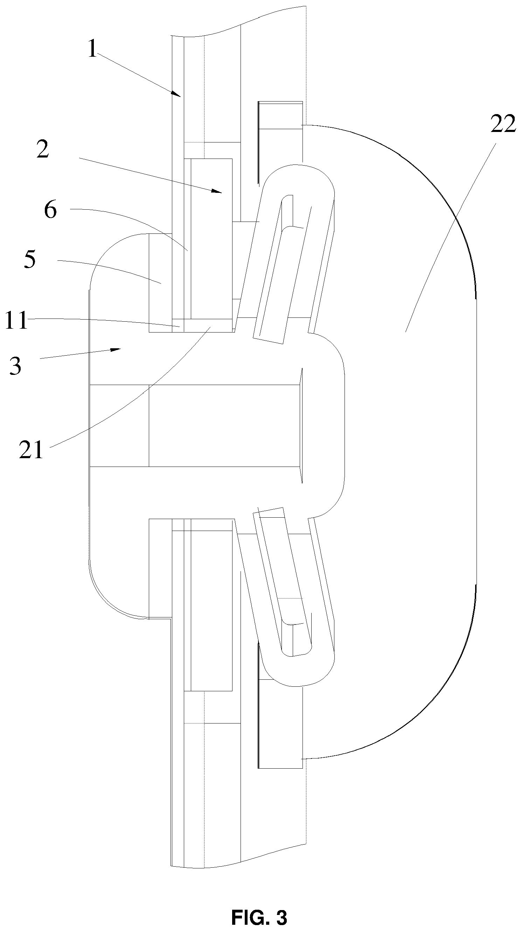

Referring to FIG. 3, in another specific embodiment of the direct lighting type panel lamp according to the present disclosure, a flexible washer 5 is arranged between the rivet 3 and the base plate 1, and the flexible washer 5 is arranged surrounding an orifice of the first riveting through hole. One side of the flexible washer 5 abuts against the base plate 1, and the other side of the flexible washer 5 abuts against the rivet 3. The flexible washer 5 can avoid a rigid contact between the rivet 3 and the outer surface of the base plate 1, so as to avoid damage of the base plate 1 during the riveting process. Moreover, the flexible washer 5 is arranged surrounding an orifice of the first riveting through hole, so that the first riveting through hole can be closed in cooperation with the rivet 3, so as to achieve dustproof and waterproof effects.

Referring to FIG. 3, in another specific embodiment of the direct lighting type panel lamp according to the present disclosure, the flexible washer 5 is a rubber ring or a silicone ring, which is deformable to a certain extent and can be brought into close contact with the base plate 1 and the rivet 3, and which has a certain corrosion resistance and can guarantee the waterproof and dustproof performance for a certain period of time.

Referring to FIG. 3, in another specific embodiment of the direct lighting type lamp panel according to the present disclosure, a thermally conductive tape 6 is arranged between the light source board 2 and the base plate 1, one side of the thermally conductive tape 6 adheres to the light source board 2, and the other side of the thermally conductive tape 6 abuts against the base plate 1. On the one hand, the thermally conductive tape 6 allows good transfer of heat from the light source board 2 to the base plate 1, to improve the heat dissipation performance of the panel lamp. On the other hand, during the assembling of the panel lamp, the light source board 2 can be preliminarily fixed to the base plate 1 by the thermally conductive tape 6, so that the light source board 2 is not likely to be displaced in the subsequent operation with the rivet 3.

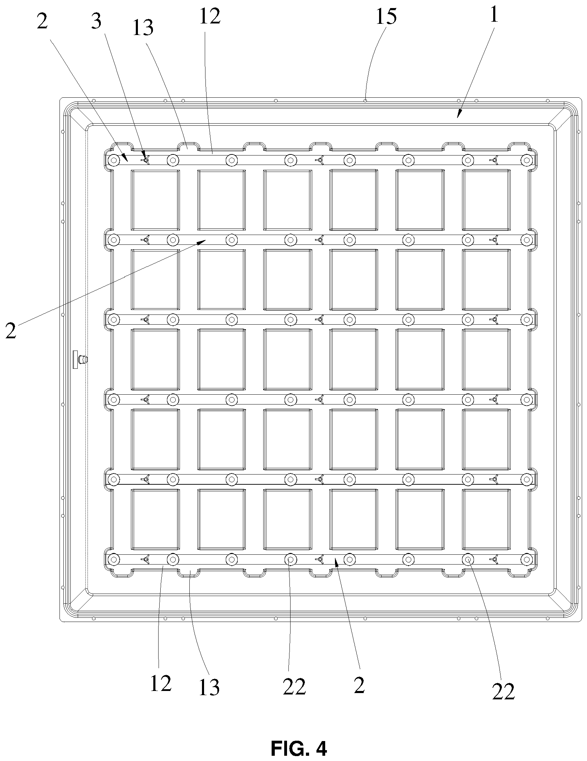

Referring to FIG. 4, in another specific embodiment of the direct lighting type panel lamp according to the present disclosure, the base plate 1 is provided with mounting grooves 12, and the light source board 2 is embedded in the mounting groove 12. The light source board 2 can be preliminarily positioned in the mounting groove 12 to avoid the displacement of the light source board 2 during riveting with the rivet 3. Also, light interference between adjacent light source boards 2 can be avoided (when a plurality of light source boards 2 are provided).

Referring to FIG. 4, in another specific embodiment of the direct lighting type panel lamp according to the present disclosure, the inner side wall of the mounting groove 12 is provided with a retreated notch(es) 13. In this way, when an operator is installing a light source board 2 or removing a light source board 2, the operator's fingers can put the light source board 2 into the mounting groove 12 through the retreated notch 13, so that the fingers will not be blocked.

Referring to FIGS. 4 to 5, in another specific embodiment of the direct lighting type lamp panel according to the present disclosure, a connecting component 7 is arranged between the base plate 1 and the diffusion plate 4, the connecting component 7 is fixedly connected to the base plate 1, and the diffusion plate 4 is fixedly connected to the connecting component 7. During the assembling of the panel lamp, after the light source board 2 is placed in the base plate 1, the diffusion plate 4 is fixed to the connecting component 7, and then the connecting component 7 is fixedly connected to the base plate 1.

Referring to FIG. 3, in another specific embodiment of the direct lighting type panel lamp according to the present disclosure, the base plate 1 is provided with connecting through holes 15, and the connecting component 7 comprises four pressure plates 71 connected end to end in sequence, and connecting screws 72 arranged between the pressure plates 71 and the base plate 1. The pressure plates 71 are provided with connecting threaded holes corresponding to the connecting through holes 15, and the connecting screws 72 pass through the connecting through holes 15 and are threadedly connected into the connecting threaded holes. During the assembling of the panel lamp, while the pressure plates 71 are fixed to the base plate 1, the diffusion plate 4 can be held by the pressure plates 71, and then the diffusion plate 4 is fixed between the pressure plates 71 and the base plate 1 to achieve the mounting of the diffusion plate 4.

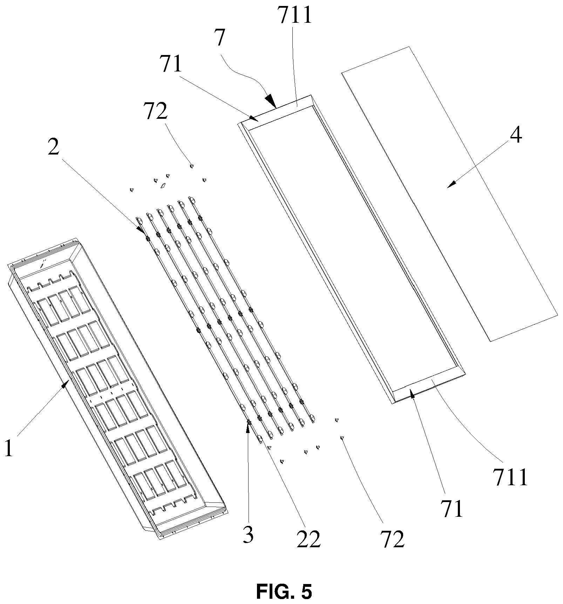

Referring to FIGS. 1 and 5, in another specific embodiment of the direct lighting type panel lamp according to the present disclosure, each of the pressure plates 71 has a surface opposite to the diffusion plate 4 provided as a holding inclined surface 711. The diffusion plate 4 may be positioned and fixed by abutting the edges of the holding inclined surfaces 711 against the diffusion plate 4.

Referring to FIG. 4, in another specific embodiment of the direct lighting type panel lamp according to the present disclosure, a plurality of rivets 3 are arranged between each light source board 2 and the base plate 1, and the plurality of rivets 3 are arranged in sequence along the length direction of the light source board 2, with the adjacent rivets 3 being spaced apart by the same distance. In this way, it is ensured that the light source board 2 is well connected and fixed to the base plate 1 as a whole, and the riveted light source board 2 is not likely to be greatly deformed partially and is in a uniform state as a whole.

Referring to FIG. 4, in another specific embodiment of the direct lighting type panel lamp according to the present disclosure, a plurality of light source boards 2 are provided. The plurality of light source boards 2 are parallel to each other, and the adjacent light source boards 2 are spaced apart by the same distance to achieve a more uniform lighting effect. Each of the light source boards 2 is provided with a plurality of lamp beads 22. The plurality of lamp beads 22 are arranged in sequence along the length direction of the light source board 2, and the adjacent lamp beads 22 are spaced apart by the same interval to achieve a more uniform lighting effect.

It can be understood that the solution in another specific embodiment may be an implementable embodiment that is further modified on the basis of other embodiments.

Apparently, the above embodiments of the present disclosure are given as examples only for clearly illustrating the present disclosure, and are not intended to limit the embodiments of the present disclosure. It will be understood by those of ordinary skill in the art that other variations or changes in different forms may be made on the basis of the above description. It is unnecessary and impossible to enumerate all the embodiments here.

## Claims

1. A direct lighting type panel lamp, comprising a base plate (1), at least one light source board (2) arranged on the base plate (1), at least one rivet (3) connected between the at least one light source board (2) and the base plate (1), and a diffusion plate (4) connected to the base plate (1), wherein the base plate (1) is provided with at least one first riveting through hole (11), the light source board (2) is provided with at least one second riveting through hole (21), the at least one rivet (3) passes through the at least one first riveting through hole (11) and the at least one second riveting through hole (21), so that the at least one light source board (2) is in riveting connection to the base plate (1), and the base plate (1) is provided with at least one mounting groove (12), and each of the at least one light source board (2) is embedded in one of the at least one mounting groove (12);
**characterized in that** an inner side wall of each of the at least one mounting groove (12) is provided with at least one retreated notch (13).

2. The direct lighting type panel lamp according to claim 1, wherein a flexible washer (5) is arranged between each of the at least one rivet (3) and the base plate (1), and the flexible washer (5) is arranged surrounding an orifice of one of the at least one first riveting through hole (11), the flexible washer (5) has one side abutting against the base plate (1), and the other side abutting against one of the at least one rivet (3).

3. The direct lighting type panel lamp according to claim 2, wherein the flexible washer (5) is a rubber ring or a silicone ring.

4. The direct lighting type panel lamp according to claim 1, wherein a thermally conductive tape (6) is arranged between each of the at least one light source board (2) and the base plate (1), wherein the thermally conductive tape (6) has one side adhering to one of the at least one light source board (2), and the other side abutting against the base plate (1).

5. The direct lighting type panel lamp according to any one of claims 1 to 4, wherein a connecting component (7) is arranged between the base plate (1) and the diffusion plate (4), wherein the connecting component (7) is fixedly connected to the base plate (1), and the diffusion plate (4) is fixedly connected to the connecting component (7).

6. The direct lighting type panel lamp according to claim 5, wherein the base plate (1) is provided with connecting through holes (15), and the connecting component (7) comprises four pressure plates (71) which are connected end to end in sequence, and connecting screws (72) which are arranged between the pressure plates (71) and the base plate (1), wherein the pressure plates (71) are provided with connecting threaded holes corresponding to the connecting through holes, and the connecting screws (72) pass through the connecting through holes and are threadedly connected into the connecting threaded holes.

7. The direct lighting type panel lamp according to claim 6, wherein each of the pressure plates (71) has a surface opposite to the diffusion plate (4) provided as a holding inclined surface (711).

8. The direct lighting type panel lamp according to any one of claims 1 to 4, wherein a plurality of rivets (3) are arranged between each of the at least one light source board (2) and the base plate (1), and the plurality of rivets (3) are arranged in sequence along a length direction of one of the at least one light source board (2), with adjacent rivets (3) being spaced apart by the same distance.

## Patentansprüche

1. Eine Direktbeleuchtungstyp-Panel-Lampe, aufweisend eine Basisplatte (1), mindestens ein Lichtquellen-Board (2), welches auf der Basisplatte (1) angeordnet ist, mindestens eine Niete (3), welche zwischen dem mindestens einen Lichtquellen-Board (2) und der Basisplatte (1) verbunden ist, und eine Diffusionsplatte (4), welche mit der Basisplatte (1) verbunden ist,
wobei
die Basisplatte (1) mit mindestens einer ersten Nietendurchgangsöffnung (11) bereitgestellt ist,
das Lichtquellen-Board (2) mit mindestens einer zweiten Nietendurchgangsöffnung (21) bereitgestellt ist, wobei die mindestens eine Niete (3) durch die mindestens eine erste Nietendurchgangsöffnung (11) und die mindestens eine zweite Nietendurchgangsöffnung (21) verläuft, so dass das mindestens eine Lichtquellen-Board (2) in einer Nietverbindung mit der Basisplatte (1) ist, und
die Basisplatte (1) mit mindestens einer Montagenut (12) bereitgestellt ist und jedes von dem mindestens einen Lichtquellen-Board (2) in einer der mindestens einen Montagenut (12) eingebettet ist;
**dadurch gekennzeichnet, dass**
eine innere Seitenwand von jeder der mindestens einen Montagenut (12) mit mindestens einer zurückversetzten Vertiefung (13) bereitgestellt ist.

2. Die Direktbeleuchtungstyp-Panel-Lampe gemäß Anspruch 1, wobei eine flexible Unterlegscheibe (5) zwischen jeder von der mindestens einen Niete (3) und der Basisplatte (1) angeordnet ist, und die flexible Unterlegscheibe (5) so angeordnet ist, dass sie eine Öffnung von einer der mindestens einen ersten Nietendurchgangsöffnung (11) umgibt, wobei die flexible Unterlegscheibe (5) eine Seite hat, welche an der Basisplatte (1) anliegt, und die andere Seite an einer der mindestens einen Niete (3) anliegt.

3. Die Direktbeleuchtungstyp-Panel-Lampe gemäß Anspruch 2, wobei die flexible Unterlegscheibe (5) ein Gummiring oder ein Silikonring ist.

4. Die Direktbeleuchtungstyp-Panel-Lampe gemäß Anspruch 1, wobei ein thermisch leitfähiges Tape (6) zwischen jedem des mindestens einen Lichtquellen-Boards (2) und der Basisplatte (1) angeordnet ist, wobei das thermisch leitfähige Tape (6) eine Seite hat, welche an einem des mindestens einen Lichtquellen-Boards (2) haftet, und die andere Seite an der Basisplatte (1) anliegt.

5. Die Direktbeleuchtungstyp-Panel-Lampe gemäß einem beliebigen der Ansprüche 1 bis 4, wobei eine Verbindungskomponente (7) zwischen der Basisplatte (1) und der Diffusionsplatte (4) angeordnet ist, wobei die Verbindungskomponente (7) mit der Basisplatte (1) fest verbunden ist, und die Diffusionsplatte (4) mit der Verbindungskomponente (7) fest verbunden ist.

6. Die Direktbeleuchtungstyp-Panel-Lampe gemäß Anspruch 5, wobei die Basisplatte (1) mit Verbindungsdurchgangsöffnungen (15) bereitgestellt ist, und die Verbindungskomponente (7) vier Druckplatten (71), welche Ende an Ende in Reihe verbunden sind, und Verbindungsschrauben (72) aufweist, welche zwischen den Druckplatten (71) und der Basisplatte (1) angeordnet sind, wobei die Druckplatten (71) mit Verbindungsgewindeöffnungen bereitgestellt sind, welche zu den Verbindungsdurchgangsöffnungen korrespondieren, und wobei die Verbindungsschrauben (72) durch die Verbindungsdurchgangsöffnungen verlaufen und gewindemäßig in den Verbindungsgewindeöffnungen verbunden sind.

7. Die Direktbeleuchtungstyp-Panel-Lampe gemäß Anspruch 6, wobei jede der Druckplatten (71) eine Oberfläche hat, welche der Diffusionsplatte (4) entgegengesetzt ist, welche als eine haltende geneigte Oberfläche (711) bereitgestellt ist.

8. Die Direktbeleuchtungstyp-Panel-Lampe gemäß einem beliebigen der Ansprüche 1 bis 4, wobei eine Mehrzahl von Nieten (3) zwischen jedem des mindestens einen Lichtquellen-Boards (2) und der Basisplatte (1) angeordnet sind, und die Mehrzahl von Nieten (3) in Reihe entlang einer Längenrichtung von einem des mindestens einen Lichtquellen-Boards (2) angeordnet sind, wobei benachbarte Nieten (3) mit dem gleichen Abstand zueinander beabstandet sind.

## Revendications

1. Lampe de panneau de type éclairage direct, comprenant une plaque de base (1), au moins une carte de source de lumière (2) agencée sur la plaque de base (1), au moins un rivet (3) relié entre ladite au moins une carte de source de lumière (2) et la plaque de base (1), et une plaque de diffusion (4) reliée à la plaque de base (1), dans laquelle la plaque de base (1) est pourvue d'au moins un premier trou de rivetage traversant (11), la carte de source de lumière (2) est pourvue d'au moins un second trou de rivetage traversant (21), ledit au moins un rivet (3) passe à travers ledit au moins un premier trou de rivetage traversant (11) et ledit au moins un second trou de rivetage traversant (21), de sorte que ladite au moins une carte de source de lumière (2) est en liaison de rivetage avec la plaque de base (1), et la plaque de base (1) est pourvue d'au moins une rainure de montage (12), et chacune de ladite au moins une carte de source de lumière (2) est intégrée dans l'une de ladite au moins une rainure de montage (12) ;
**caractérisée en ce qu'**une paroi latérale intérieure de chacune de ladite au moins une rainure de montage (12) est pourvue d'au moins une encoche rétractée (13).

2. Lampe de panneau de type éclairage direct selon la revendication 1, dans laquelle une rondelle flexible (5) est agencée entre chacun dudit au moins un rivet (3) et la plaque de base (1), et la rondelle flexible (5) est agencée entourant un orifice de l'un dudit au moins un premier trou traversant de rivetage (11), la rondelle flexible (5) présente un côté venant en butée contre la plaque de base (1), et l'autre côté venant en butée contre l'un dudit au moins un rivet (3).

3. Lampe de panneau de type éclairage direct selon la revendication 2, dans laquelle la rondelle flexible (5) est un anneau en caoutchouc ou un anneau en silicone.

4. Lampe de panneau de type éclairage direct selon la revendication 1, dans laquelle un ruban thermoconducteur (6) est agencé entre chacune de ladite au moins une carte de source de lumière (2) et la plaque de base (1), dans laquelle le ruban thermoconducteur (6) présente un côté adhérant à l'une de ladite au moins une carte de source de lumière (2), et l'autre côté venant en butée contre la plaque de base (1).

5. Lampe de panneau de type éclairage direct selon l'une quelconque des revendications 1 à 4, dans laquelle un composant de liaison (7) est agencé entre la plaque de base (1) et la plaque de diffusion (4), dans laquelle le composant de liaison (7) est relié de manière fixe à la plaque de base (1), et la plaque de diffusion (4) est reliée de manière fixe au composant de liaison (7).

6. Lampe de panneau de type éclairage direct selon la revendication 5, dans laquelle la plaque de base (1) est pourvue de trous de liaison traversants (15), et le composant de liaison (7) comprend quatre plaques de pression (71) qui sont reliées bout à bout à la suite, et des vis de liaison (72) qui sont agencées entre les plaques de pression (71) et la plaque de base (1), dans laquelle les plaques de pression (71) sont pourvues de trous de liaison filetés correspondant aux trous de liaison traversants, et les vis de liaison (72) passent à travers les trous de liaison traversants et sont reliées par vissage dans les trous de liaison filetés.

7. Lampe de panneau de type éclairage direct selon la revendication 6, dans laquelle chacune des plaques de pression (71) présente une surface opposée à la plaque de diffusion (4) prévue en tant que surface inclinée de maintien (711).

8. Lampe de panneau de type éclairage direct selon l'une quelconque des revendications 1 à 4, dans laquelle une pluralité de rivets (3) sont agencés entre chacune de ladite au moins une carte de source de lumière (2) et la plaque de base (1), et la pluralité de rivets (3) sont agencés à la suite le long d'une direction de longueur de l'une de ladite au moins une carte de source de lumière (2), des rivets adjacents (3) étant espacés de la même distance.
